# EUROPEAN PATENT APPLICATION

(11) **EP 3 711 913 A1**
(43) Date of publication of application: **23.09.2020**
(21) Application number: 18877699.1
(22) Date of filing: 08.11.2018
(51) Int. Cl.: B26F 3/00, A21C 15/04

(54) **MACHINE FOR CUTTING FOOD PRODUCTS USING A HIGH-PRESSURE WATER JET**

(30) Priority: 14.11.2017 ES 201731319
(71) Applicant: Metronics Technologies S.L, 31110 Noain (Navarra) (ES)
(72) Inventor: DE ORTE GLARIA, Benito Andrés, 31110 Noain (Navarra) (ES)
(74) Representative: Evens, Paul Jonathan
(86) International application number: PCT/ES2018/070723
(87) International publication number: WO 2019/097100

(57) **Abstract**

The invention relates to a waterjet food cutting machine (3) comprising a tray (4) on which a food item (3) is arranged, a pressurized waterjet cutting head (7), a first extendable arm (5) with an articulated fixed end (5.1) that rotates freely with respect to the machine and a free end (5.2), in the proximity of which the cutting head (7) is arranged, and a second extendable arm (6) that has an articulated fixed end (6.1) that rotates freely with respect to the machine and a free end (6.2), wherein the free end (6.2) of the second extendable arm (6) is joined to the free end (5.2) of the first extendable arm (5) by means of an articulation (8).

## Description

### Technical field

The present invention is related to machines used to cut food items, and more specifically to a machine that allows food items such as pies, cakes or similar to be cut with precision.

### State of the art

The use of waterjet cutting technology has become widely used in the baking and confectionery food sector due to the versatility and ease of use thereof. The use of water for cutting food items implies an improvement compared to conventional cutting systems using blades. Since blades are not used, no time is lost in changing or sharpening them; moreover, this technology involves a cutting method that is hygienic and bacteria-free, since the risk of contamination associated with the use of blades is eliminated.

Food cutting machines for food items such as pies, cakes or similar have a waterjet cutting head and a tray on which the food item to be cut is arranged. The cutting head is arranged on the free end of the movable arm that can be moved over the food item to thereby be able make the required cutting trajectories over said food item.

With this embodiment, the cutting head is a cantilevered element in which there are undesired moments of inertia that can cause the food items to be cut imprecisely, thereby affecting the quality of the final product. This is a serious problem for products such as pies, cakes or similar, wherein the aesthetics of the final product is a highly relevant factor for the sale thereof.

Furthermore, the movement of the cutting head is carried out by an actuation system using two dimensions (X and Y) that is made up of linear guides, belts, visible screws, or other mechanical elements that are unsuitable to be in the area through which food items are passing. These elements are often very close to the food items and can possibly contaminate the products to be cut with lubricants, residue from cleaning products, particles caused by the friction of mechanical elements, or other elements that cannot be eliminated by washing procedures. Additionally, not all of the elements are always stainless or resistant to aggressive cleaning products.

In other embodiments of the machine, the cutting head remains stationary and the tray with the food item moves under the head. In this case, the cutting speed and the precision are negatively affected by the inertia of the food item, which may result in it moving on the tray, sliding, falling off the tray after being cut, and other imprecisions, limiting the acceleration that can be reached and increasing the time of each cutting cycle.

It is therefore, necessary to provide an alternative solution that improves the precision of waterjet cutting machines that use movable arms to hold the cutting head and which furthermore comply with the strictest of hygienic standards.

### Object of the invention

The object of the invention is a pressurized waterjet food cutting machine comprising:
- a tray on which a food item to be cut is arranged,
- a pressurized waterjet cutting head,
- a first extendable arm that has an articulated fixed end that rotates freely with respect to the machine and a free end, in the proximity of which the cutting head is arranged, and
- a second extendable arm that has an articulated fixed end that rotates freely with respect to the machine and a free end, wherein the free end of the second extendable arm is joined to the free end of the first extendable arm by means of an articulation.

According to a preferred embodiment of the invention, the cutting head is arranged on the articulation of the free ends of the extendable arms, and therefore the weight of the cutting head is correctly distributed between both extendable arms.

Each extendable arm comprises a mobile part joined to a sliding carriage that moves on a guide defined on the lower part of a casing in which the mobile part is partially housed.

The sliding carriage that holds the mobile part is actuated by a screw/nut mechanism that comprises a threaded shaft that meshes with the nut defined in the sliding carriage.

The threaded shaft of the screw/nut mechanism is coupled to a motor by means of a transmission belt.

The transmission belt is arranged in a cylindrical casing made of brushed stainless steel.

The machine additionally comprises lifting means to jointly actuate the extendable arms, thereby regulating the distance between the cutting head and the tray.

Therefore, it is possible to obtain a pressurized waterjet food cutting machine wherein the cutting head is properly held by the extendable arms, reducing the moments of inertia that result from the movements of the head during the cutting. Furthermore, the hygiene conditions of the machine are improved, given that the actuation of the extendable arms is done outside of the cutting area where the food items are arranged.

### Description of the figures

Figure 1 shows a perspective view of the food cutting machine of the invention.
Figure 2 shows a perspective view of the extendable arms of the machine represented in the preceding figure.
Figure 3 shows a partial cross-sectional view of the actuation mechanisms of one of the extendable arms.

### Detailed description of the invention

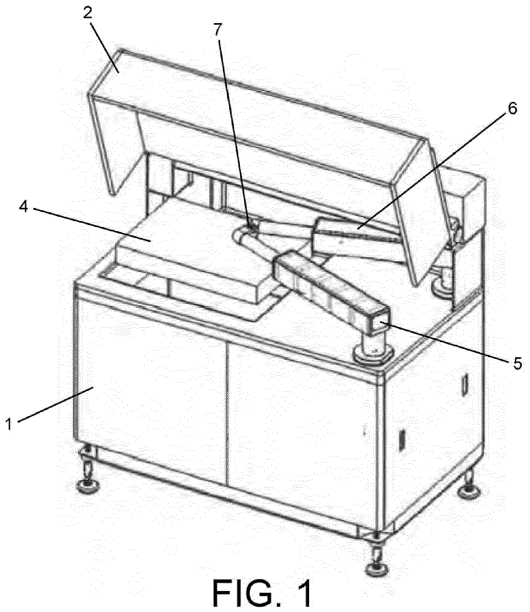

Figure 1 shows a pressurized waterjet food cutting machine according to the invention. The machine comprises a frame (1) and a hinged cover (2), arranged on the upper part of the machine, which provides access to the cutting area where the food items (3) are arranged.

The cutting area has a tray (4) on which the food items (3) to be cut are arranged and two extendable arms (5,6) that hold a pressurized waterjet cutting head (7).

The tray (4) is preferably removable, so as to be able to more suitably place the food elements (3) to be cut on the tray. The tray (4) can be made with a mesh or a blade bed to allow the water to drain during the cutting.

The first extendable arm (5) has an articulated fixed end (5.1) that rotates freely with respect to the frame (1) of the machine and a free end (5.2), in the proximity of which the cutting head (7) is arranged, while the second extendable arm (6) has a fixed end (6.1) that is also articulated and rotates freely with respect to the frame (1) of the machine and a free end (6.2), the free end (6.2) of the second extendable arm (6) being joined to the free end (5.2) of the first extendable arm (5) by means of an articulation (8).

This way, the extendable arms (5,6) are arranged in the cutting area in a V-shaped configuration, joined in an articulated fashion to one another at the free ends (5.2, 6.2) thereof and joined in the free rotation thereof to the machine by the fixed ends (5.1,6.2) thereof, and the cutting head (7) is arranged in the proximity of the joint of the free ends (5.2, 6.2) of the extendable arms (5,6) such that a more rigid configuration of the arms (5,6) is achieved than in solutions of the state of the art, improving the precision and control of the movements of the cutting head (7).

This way the rotation of each one of the extendable arms (5,6) is actuated by the extension or retraction of the other arm (5,6). Furthermore, this actuation is applied at a significant distance from the rotational shaft of each arm (5,6) with respect to the frame (1), since it is applied to the free ends (5.2, 6.2) of the arms (5,6), and as such the rotation precision obtained is greater than if the rotation of each arm (5,6) of the machine with respect to the frame (1) were directly applied to the articulation of the end (5.1,6.1) fixed to the frame (1).

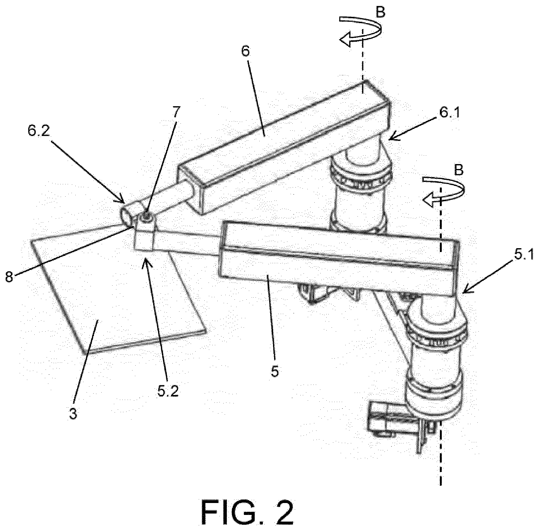

According to the exemplary embodiment shown in figures 1 and 2, the cutting head (7) is arranged on the articulation (8) of the free ends (5.2, 6.2) of the extendable arms (5,6), thereby improving the stability of the cutting head (7), although this arrangement is not limited, the cutting head (7) being able to be arranged in a different location other than the articulated joint of both arms (5,6), for example on an extension of the free end (5.2, 6.2) of the first (5) or second extendable arm (6).

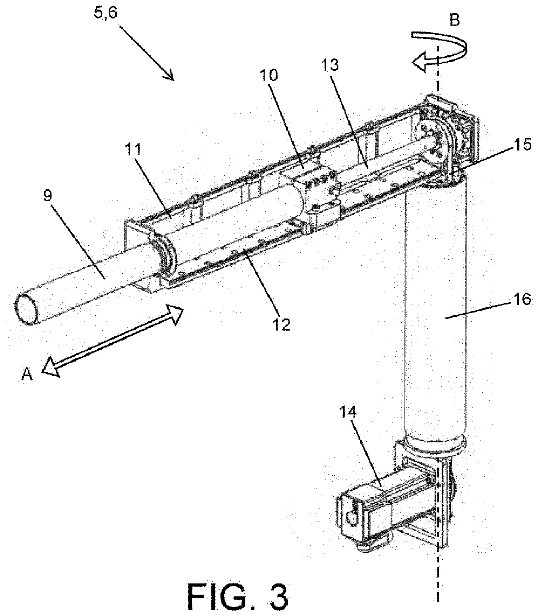

Figure 3 shows an exemplary embodiment of one of the extendable arms (5,6), with the embodiment of the other one of the extendable arms (5,6) being identical. The extendable arm (5.6) comprises a mobile part (9) that is joined to a sliding carriage (10) that is arranged inside a casing (11) wherein the mobile part (9) is partially housed. Defined on the lower part of the casing (11) is a guide (12) on which the sliding carriage (10) holding the mobile part (9) can slide.

On the free end thereof, the mobile part (9) has the articulation (8) in which the cutting head (7) is located, said free end corresponding to the free end (5.2,6.2) of the extendable arm (5,6).

The sliding carriage (10) is actuated by a screw/nut mechanism that comprises a threaded shaft (13) that meshes with a nut defined in the sliding carriage (10), such that the rotation of the threaded shaft (13) causes a linear movement of the sliding carriage (10) on the guide (12) in the direction represented by arrow A.

The screw/nut mechanism is preferably consists of a ball screw due to the high rotational speed it can reach during operation.

The threaded shaft (13) is coupled to an actuation motor (14) by means of a transmission belt (15).

The transmission belt (15) is housed in a brushed stainless steel cylindrical casing (16) which has sealing gaskets to ensure that no residue caused by the transmission can contaminate the cutting area. Both the casing (11) and the cylindrical casing (16) are elements that can easily be cleaned without leaving any residue that could contaminate the food items.

Both extendable arms (5,6) are preferably actuated independently by a respective motor (14), such that by controlling the linear movement of the movable parts (9) of both arms (5,6), the trajectories of the cutting head (7) over the food item (3) are also controlled.

The joint rotation, represented by the arrow (B) in the figures, between the fixed ends (5.1, 6.2) of the extendable arms (5,6) and the frame (1) of the machine, is free, such that only the linear actuation of the mobile parts (9) of the arms (5,6) is required for the movement of the cutting head (7) over the work surface.

The machine additionally comprises lifting means that allow both extendable arms (5,6) to be simultaneously actuated to thereby adjust the distance between the cutting head (7) and the tray (4), such that the machine can be adjusted for foods (3) with different heights.

It is envisaged that the tray (4) on which the food items (3) are arranged is stationary and that the extendable arms (5,6) are configured to reach any point on the surface of the tray (4), although the tray (4) can be movable by any suitable actuation means, such that the tray (4) can move towards or away from the cutting head (7), and thus the extendable arms (5,6) can be made smaller to carry out the movements in direction (A). Furthermore, the combined movement of the tray (4) and the cutting head (7) enable an optimal distribution of the accelerations between both elements.

Additionally, the machine comprises a mobile drain to drain the water used for cutting the food items (3), said drain being made up of a movable tube that moves on a horizontal plane following the movements of the cutting head (7).

## Claims

1. A pressurized waterjet food cutting machine (3) comprising:
• a tray (4) on which a food item (3) to be cut is arranged, and
• a pressurized waterjet cutting head (7), **characterized in that** it additionally comprises:
• a first extendable arm (5) that has an articulated fixed end (5.1) that rotates freely with respect to the machine and a free end (5.2), in the proximity of which the cutting head (7) is arranged, and
• a second extendable arm (6) that has an articulated fixed end (6.1) that rotates freely with respect to the machine and a free end (6.2), wherein the free end (6.2) of the second extendable arm (6) is joined to the free end (5.2) of the first extendable arm (5) by means of an articulation (8).

2. The pressurized waterjet food cutting machine, according to claim 1, **characterized in that** the cutting head (7) is arranged at the articulation (8) of the free ends (5.2, 6.2) of the extendable arms (5,6).

3. The pressurized waterjet food cutting machine, according to any of the preceding claims, **characterized in that** each extendable arm (5,6) comprises a mobile part (9) joined to a sliding carriage (10) that moves on a guide (12) defined on the lower part of a casing (11) in which the mobile part is partially (9) housed.

4. The pressurized waterjet food cutting machine, according to the preceding claim, **characterized in that** each sliding carriage (10) that holds the mobile part (9) is actuated by a screw/nut mechanism that comprises a threaded shaft (13) that meshes with the nut defined in the sliding carriage (10).

5. The pressurized waterjet food cutting machine, according to the preceding claim, **characterized in that** the cutting head (13) is coupled to a motor (14) by means of a transmission belt (15).

6. The pressurized waterjet food cutting machine, according to the preceding claim, **characterized in that** the transmission belt (15) is arranged in a brushed stainless steel cylindrical casing (16)

7. The pressurized waterjet food cutting machine, according to any of the preceding claims, **characterized in that** it additionally comprises lifting means to jointly actuate the extendable arms (5,6), thereby adjusting the distance between the cutting head (7) and the tray (4).

8. The pressurized waterjet food cutting machine, according to any one of the preceding claims, **characterized in that** the tray (4) is movable.

9. The pressurized waterjet food cutting machine, according to any one of the preceding claims, **characterized in that** it additionally comprises a mobile drain to drain the water.

10. The pressurized waterjet food cutting machine, according to any one of the preceding claims, **characterized in that** the tray (4) is made up of a mesh or a blade bed to allow the water to drain during the cutting.
